(19) Europäisches Patentamt
European Patent Office
Office européen des brevets

(11) EP 4 672 742 A1

(12) EUROPEAN PATENT APPLICATION

(43) Date of publication:
31.12.2025 Bulletin 2026/01

(21) Application number: 24306018.3

(22) Date of filing: 25.06.2024

(51) International Patent Classification (IPC):
H04N 19/11 (2014.01)    H04N 19/105 (2014.01)
H04N 19/119 (2014.01)    H04N 19/147 (2014.01)
H04N 19/176 (2014.01)    H04N 19/593 (2014.01)

(52) Cooperative Patent Classification (CPC):
H04N 19/11; H04N 19/105; H04N 19/119;
H04N 19/147; H04N 19/176; H04N 19/593

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• RATH, Gagan Bihari
  35000 RENNES (FR)
• RADOSAVLJEVIC, Milos
  35000 RENNES (FR)
• URBAN, Fabrice
  35235 THORIGNE-FOUILLARD (FR)

(74) Representative: Interdigital
Immeuble ZEN 2
845 A, avenue des Champs Blancs
35510 Cesson-Sévigné (FR)

(54) **SPATIAL GEOMETRIC PARTITION MODE IMPROVEMENTS**

(57) A method comprising:
obtaining a target block;
obtaining a neighbor template of samples in a reconstructed neighborhood of the current block;
determining a combination of a pair of intra prediction modes and a partition mode based on predictions of the neighbor template from a reference array of samples in a reconstructed neighborhood of the neighbor template, wherein the selected partition mode depends (901, 902, 903, 904) on a geometrical condition based on target block's parameters; and
predicting the target block using the combination.

Fig. 9

Processed by Luminess, 75001 PARIS (FR)

**Description**

1. TECHNICAL FIELD

At least one of the present embodiments generally relates to a method and a device for applying intra prediction in a picture.

2. BACKGROUND

To achieve high compression efficiency, video coding schemes usually employ predictions and transforms to leverage spatial and temporal redundancies in a video content. During an encoding, pictures of the video content are divided into blocks of samples (i.e., pixels), these blocks being then partitioned into one or more sub-blocks, called original sub-blocks in the following. An intra or inter prediction is then applied to each sub-block to exploit intra or inter image correlations. Whatever the prediction method used (intra or inter), a predictor sub-block is determined for each original sub-block. Then, a sub-block representing a difference between the original sub-block and the predictor sub-block, often denoted as a prediction error sub-block, or a prediction residual sub-block, or simply a residual sub-block, is transformed, quantized, and entropy coded to generate an encoded video stream. To reconstruct the video, the compressed data is decoded by inverse processes corresponding to the transform, quantization, and entropic coding.

Many coding tools for intra prediction were proposed in the past. Until recently, a great majority of intra prediction tools were forward prediction tools, that is, the prediction methods used at the encoder is explicitly signaled to the decoder. Thus, the decoder complexity is kept at the minimum.

A current trend is to complement the forward intra prediction tools by intra tools employing backward estimation, that is, the intra prediction modes are estimated using already decoded causal samples in a picture.

Spatial geometric partition mode (SGPM) is an intra prediction tool where a target block is split in two parts and each part is predicted with a different intra prediction mode. The prediction is obtained by predicting the whole block with the two candidate prediction modes and then blending those two predictions according to the split direction. The combinations of the split direction and the two prediction modes are selected using a template. In current implementations of SGPM, some features of the target block are not considered in the application of the SGPM tool.

It is desirable to propose solutions allowing to overcome the above issue. In particular, it is desirable to propose solution to improve the SGPM tool.

3. BRIEF SUMMARY

In a first aspect, one or more of the present embodiments provide a method comprising:

> obtaining a target block;
> obtaining a neighbor template of samples in a reconstructed neighborhood of the target block;
> determining a combination of a pair of intra prediction modes and a partition mode based on predictions of the neighbor template from a reference array of samples in a reconstructed neighborhood of the neighbor template, wherein the partition mode depends on a geometrical condition based on target block's parameters; and
> predicting the target block using the combination.

According to an embodiment, the geometrical condition is based on whether the target block is rectangular with a width greater than a height or rectangular with the height greater than the width or based on a comparison of a multiplication of the width of the block by the height of the block with a value.

In a second aspect, one or more of the present embodiments provide a method comprising:

> obtaining a target block;
> obtaining a neighbor template of samples in a reconstructed neighborhood of the target block;
> determining a combination of a pair of intra prediction modes and a partition mode from an initial list of combinations of a pair of intra prediction modes and a partition mode based on predictions of the neighbor template from a reference array of samples in a reconstructed neighborhood of the neighbor template; and
> predicting the target block using the combination;
> wherein, the obtaining of the initial list comprises:

>> for each partition mode of a list of partition modes: determining one or more best pairs of intra prediction modes according to a distortion criteria, the distortion criteria consisting, for a combination of a partition mode and a pair of intra prediction modes in computing a distortion between the neighboring template and a prediction of the neighboring template from the reference array based on the partition mode and the pair of intra prediction modes, the intra prediction modes having a first angular resolution;

creating one or more first candidate combinations from the partition mode and the one or more best pairs and one or more second candidate combinations from the partition mode and one or more refined pairs resulting from a refinement of at least one intra prediction mode of one of the best pair to a second angular resolution finer than the first angular resolution; and inserting each first candidate combination and each second candidate combination in the initial list.

In a third aspect, one or more of the present embodiments provide a method comprising obtaining a target block;

obtaining a neighbor template of samples in a reconstructed neighborhood of the target block;
determining a combination of a pair of intra prediction modes and a partition mode from an initial list of combinations of a pair of intra prediction modes and a partition mode based on predictions of the neighbor template from a reference array of samples in a reconstructed neighborhood of the neighbor template; and
predicting the target block using the combination;
wherein, each intra prediction mode of each pair of intra prediction modes of each combination of a pair of intra prediction modes and a partition mode of the initial list is a regular intra prediction mode.

In a fourth aspect, one or more of the present embodiments provide a method comprising:

obtaining a target block;
obtaining a neighbor template of samples in a reconstructed neighborhood of the target block;
determining a combination of a pair of intra prediction modes and a partition mode from an initial list of combinations of a pair of intra prediction modes and a partition mode based on predictions of the neighbor template from a reference array of samples in a reconstructed neighborhood of the neighbor template; and,
predicting the target block using the combination;
wherein, the obtaining of the initial list comprises:
for each partition mode of a list of partition modes and each pair of intra prediction modes of a list of pairs of intra prediction modes:

creating a candidate combination from the partition mode and the pair of intra prediction modes only responsive to the candidate combination respects two consistency criterion, a first consistency criterion of the two consistency criterion being respected responsive to reference samples used for one partition of the target block are different from reference samples used for another partition of the target block and a second consistency criterion of the two consistency criterion being respected responsive to reference samples for a right partition of the target block come from a top part of the neighboring template; and,
inserting the candidate combination in the initial list.

In a fifth aspect, one or more of the present embodiments provide a method for encoding comprising the method of the first, second, third or fourth aspects.

In a sixth aspect, one or more of the present embodiments provide a method for decoding comprising the method of the first, second, third or fourth aspects.

In a seventh aspect, one or more of the present embodiments provide a device comprising electronic circuitry configured for:

obtaining a target block;
obtaining a neighbor template of samples in a reconstructed neighborhood of the target block;
determining a combination of a pair of intra prediction modes and a partition mode based on predictions of the neighbor template from a reference array of samples in a reconstructed neighborhood of the neighbor template, wherein the partition mode depends on a geometrical condition based on target block's parameters; and
predicting the target block using the combination.

In an embodiment, the geometrical condition is based on whether the target block is rectangular with a width greater than a height or rectangular with the height greater than the width or based on a comparison of a multiplication of the width of the block by the height of the block with a value.

In a eighth aspect, one or more of the present embodiments provide a device comprising electronic circuitry configured for:

obtaining a target block;

obtaining a neighbor template of samples in a reconstructed neighborhood of the target block;

determining a combination of a pair of intra prediction modes and a partition mode from an initial list of combinations of a pair of intra prediction modes and a partition mode based on predictions of the neighbor template from a reference array of samples in a reconstructed neighborhood of the neighbor template; and

predicting the target block using the combination;

wherein, the obtaining of the initial list comprises:

for each partition mode of a list of partition modes: determining one or more best pairs of intra prediction modes according to a distortion criteria, the distortion criteria consisting, for a combination of a partition mode and a pair of intra prediction modes in computing a distortion between the neighboring template and a prediction of the neighboring template from the reference array based on the partition mode and the pair of intra prediction modes, the intra prediction modes having a first angular resolution;

creating one or more first candidate combinations from the partition mode and the one or more best pairs and one or more second candidate combinations from the partition mode and one or more refined pairs resulting from a refinement of at least one intra prediction mode of one of the best pair to a second angular resolution finer than the first angular resolution; and inserting each first candidate combination and each second candidate combination in the initial list.

In a ninth aspect, one or more of the present embodiments provide a device comprising electronic circuitry configured for:

obtaining a target block;

obtaining a neighbor template of samples in a reconstructed neighborhood of the target block;

determining a combination of a pair of intra prediction modes and a partition mode from an initial list of combinations of a pair of intra prediction modes and a partition mode based on predictions of the neighbor template from a reference array of samples in a reconstructed neighborhood of the neighbor template; and

predicting the target block using the combination;

wherein, each intra prediction mode of each pair of intra prediction modes of each combination of a pair of intra prediction modes and a partition mode of the initial list is a regular intra prediction mode.

In a tenth aspect, one or more of the present embodiments provide a device comprising electronic circuitry configured for:

obtaining a target block;

obtaining a neighbor template of samples in a reconstructed neighborhood of the target block;

determining a combination of a pair of intra prediction modes and a partition mode from an initial list of combinations of a pair of intra prediction modes and a partition mode based on predictions of the neighbor template from a reference array of samples in a reconstructed neighborhood of the neighbor template; and,

predicting the target block using the combination;

wherein, the obtaining of the initial list comprises:

for each partition mode of a list of partition modes and each pair of intra prediction modes of a list of pairs of intra prediction modes:

creating a candidate combination from the partition mode and the pair of intra prediction modes only responsive to the candidate combination respects two consistency criterion, a first consistency criterion of the two consistency criterion being respected responsive to reference samples used for one partition of the target block are different from reference samples used for another partition of the target block and a second consistency criterion of the two consistency criterion being respected responsive to reference samples for a right partition of the target block come from a top part of the neighboring template; and,

inserting the candidate combination in the initial list.

In a eleventh aspect, one or more of the present embodiments provide an encoding apparatus comprising a device according to the seventh, eighth, ninth, or tenth aspects.

In a twelfth aspect, one or more of the present embodiments provide a decoding apparatus comprising a device according to the seventh, eighth, ninth, or tenth aspects.

In a thirteenth aspect, one or more of the present embodiments provide a non-transitory information storage medium storing program code instructions for implementing the method according to the first, second, third or fourth aspects.

In a fourteenth aspect, one or more of the present embodiments provide a non-transitory information storage medium storing program code instructions for implementing the method according to the first, second, third or fourth aspects.

In a fifteenth aspect, one or more of the present embodiments provide a computer program comprising program code instructions for implementing the method according to the first, second, third or fourth aspects.

## 4. BRIEF SUMMARY OF THE DRAWINGS

Fig. 1 illustrates schematically a context in which embodiments are implemented;
Fig. 2 illustrates schematically an example of partitioning undergone by a picture of pixels of an original video;
Fig. 3 depicts schematically a method for encoding a video stream;
Fig. 4 depicts schematically a method for decoding an encoded video stream;
Fig. 5A illustrates schematically an example of hardware architecture of a processing module able to implement an encoding module or a decoding module in which various aspects and embodiments are implemented;
Fig. 5B illustrates a block diagram of an example of a first system in which various aspects and embodiments are implemented;
Fig. 5C illustrates a block diagram of an example of a second system in which various aspects and embodiments are implemented;
Fig. 6A illustrates the SGPM mode;
Fig. 6B illustrates an embodiment of a SGPM process;
Fig. 7 illustrates a neighboring template and a reference array used in the SGPM mode;
Fig. 8 illustrates partition modes used in the SGPM process;
Fig. 9 illustrates a process according to a first embodiment of an improvement of the SGPM mode;
Fig. 10 illustrates a process according to a second embodiment of an improvement of the SGPM mode;
Fig. 11 illustrates wide angular modes;
Figs. 12 and 13 illustrates a third embodiment of an improvement of the SGPM mode; and,
Figs. 14, 15 and 16 illustrates a fourth embodiment of an improvement of the SGPM mode.

## 5. DETAILED DESCRIPTION

The following examples of embodiments are described in the context of a video format similar to ECM as described in document JVET-AF2025: Algorithm description of Enhanced Compression Model 11 (ECM 11) / Joint Video Experts Team (JVET) of ITU-T SG 16 WP 3 and ISO/IEC JTC 1/SC 29, 32nd Meeting, Hannover, DE, 13-20 October 2023 just called *JVET-AF2025* in the following. However, these embodiments are not limited to the video coding/decoding method corresponding to ECM. These embodiments are, in particular, adapted to various video formats comprising (and derived from) for example VVC (Versatile Video Coding (VVC), ITU-T H.266), HEVC (ISO/IEC 23008-2 - MPEG-H Part 2, High Efficiency Video Coding / ITU-T H.265)), AVC ((ISO/CEI 14496-10), EVC (Essential Video Coding/MPEG-5), AV1, AV2 and VP9. In addition, these embodiments are also adapted to various still picture formats such as JPEG.

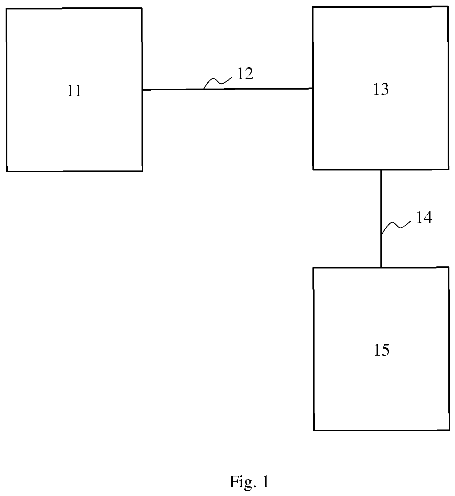

**Fig. 1** illustrates schematically a context in which embodiments are implemented.

In Fig. 1, a system 11, that could be a camera, a storage device, a computer, a server or any device capable of delivering a video stream (i.e., video data), transmits a video stream to a system 13 using a communication channel 12. The video stream is either encoded and transmitted by the system 11 or received and/or stored by the system 11 and then transmitted. The communication channel 12 is a wired (for example Internet or Ethernet) or a wireless (for example WiFi, 3G, 4G or 5G) network link.

The system 13, that could be for example a set top box, receives and decodes the video stream to generate a sequence of decoded pictures. A post processing may be applied to the decoded pictures.

The obtained sequence of decoded pictures is then transmitted to a display system 15 using a communication channel 14, that could be a wired or wireless network. The display system 15 then displays said pictures.

In an embodiment, the system 13 is comprised in the display system 15. In that case, the system 13 and display system 15 are comprised in a TV, a computer, a tablet, a smartphone, a head-mounted display, etc.

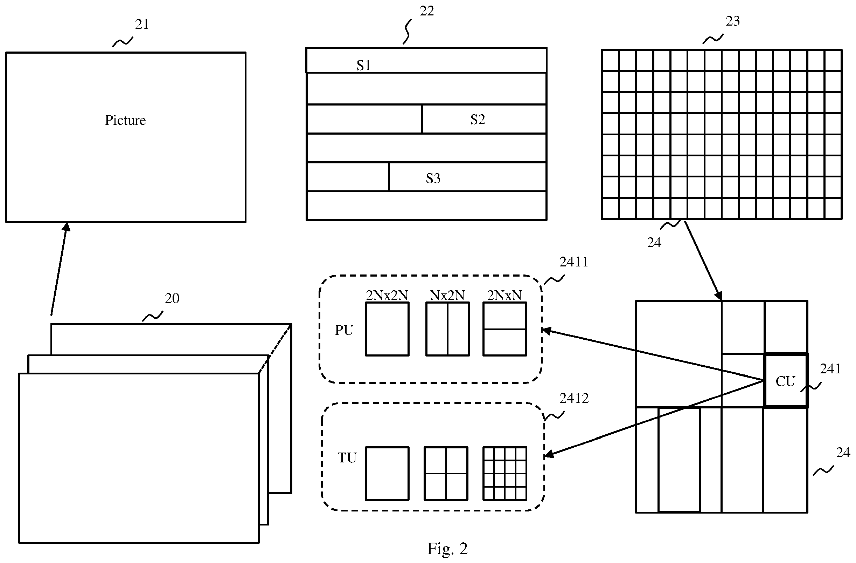

Figs. 2, 3 and 4 introduce an example of video format.

**Fig. 2** illustrates an example of partitioning undergone by a picture of pixels 21 of an original video sequence 20. It is considered here that a pixel is composed of three components: a luminance component and two chrominance components. Other types of pixels are however possible comprising less or more components such as only a luminance component or an additional depth component or transparency component.

A picture is divided into a plurality of coding entities. First, as represented by reference 23 in Fig. 2, a picture is divided in a grid of blocks called *coding tree units* (CTU). A CTU consists of an $N \times N$ block of luminance samples together with two corresponding blocks of chrominance samples. $N$ is generally a power of two having a maximum value of "128" for example. Second, a picture is divided into one or more groups of CTU. For example, it can be divided into one or more tile rows and tile columns, a *tile* being a sequence of CTUs covering a rectangular region of a picture. In some cases, a tile could be divided into one or more *bricks,* each of which consisting of at least one row of CTUs within the tile. Above the concept of tiles and bricks, another encoding entity, called *slice,* exists, that can contain at least one tile of a picture or at least one brick of a tile.

In the example of Fig. 2, as represented by reference 22, the picture 21 is divided into three slices S1, S2 and S3 of the raster-scan slice mode, each comprising a plurality of tiles (not represented), each tile comprising only one brick.

As represented by reference 24 in Fig. 2, a CTU may be partitioned into the form of a hierarchical tree of one or more sub-blocks called *coding units* (CU). The CTU is the root (*i.e.* the parent node) of the hierarchical tree and can be partitioned in a plurality of CUs (*i.e.* child nodes). Each CU becomes a leaf of the hierarchical tree if it is not further partitioned in smaller CUs, or becomes a parent node of smaller CUs (*i.e.* child nodes) if it is further partitioned.

In the example of Fig. 2, the CTU 24 is first partitioned in "4" square CUs using a quadtree type partitioning. The upper left CU is a leaf of the hierarchical tree since it is not further partitioned, *i.e.,* it is not a parent node of any other CU. The upper right CU is further partitioned in "4" smaller square CUs using again a quadtree type partitioning. The bottom right CU is vertically partitioned in "2" rectangular CUs using a binary tree type partitioning. The bottom left CU is vertically partitioned in "3" rectangular CUs using a ternary tree type partitioning.

During the coding of a picture, the partitioning is adaptive, each CTU being partitioned so as to optimize a compression efficiency of the CTU criterion.

In HEVC the concept of prediction unit (PU) and transform unit (TU) were also introduced. Indeed, in HEVC, the coding entities that are used for prediction (*i.e.,* a PU) and transform (*i.e.* a TU) can be different subdivisions of a CU. For example, as represented in Fig. 2, a CU of size $2N \times 2N,$ can be divided in PUs 2411 of size $N \times 2N$ or of size $2N \times N$. In addition, said CU can be divided in "4" TUs 2412 of size $N \times N$ or in "16" TUs of size $\left(\frac{N}{2}\right) \times \left(\frac{N}{2}\right)$. The TUs are always of square shapes.

One can note that in VVC, except in some particular cases, boundaries of the TU and PU are aligned on those of the CU. Consequently, a CU comprises generally one TU and one PU.

In the present application, the term "block" or "picture block" can be used to refer to any one of a CTU, a CU, a PU and a TU. In addition, the term "block" or "picture block" can be used to refer to a macroblock, a partition and a sub-block as specified in H.264/AVC or in other video coding standards, and more generally to refer to an array of samples of numerous sizes.

In the present application, the terms "reconstructed" and "decoded" may be used interchangeably, the terms "pixel" and "sample" may be used interchangeably, the terms "image," "picture", "sub-picture", "slice" and "frame" may be used interchangeably. Usually, but not necessarily, the term "reconstructed" is used at the encoder side while "decoded" is used at the decoder side.

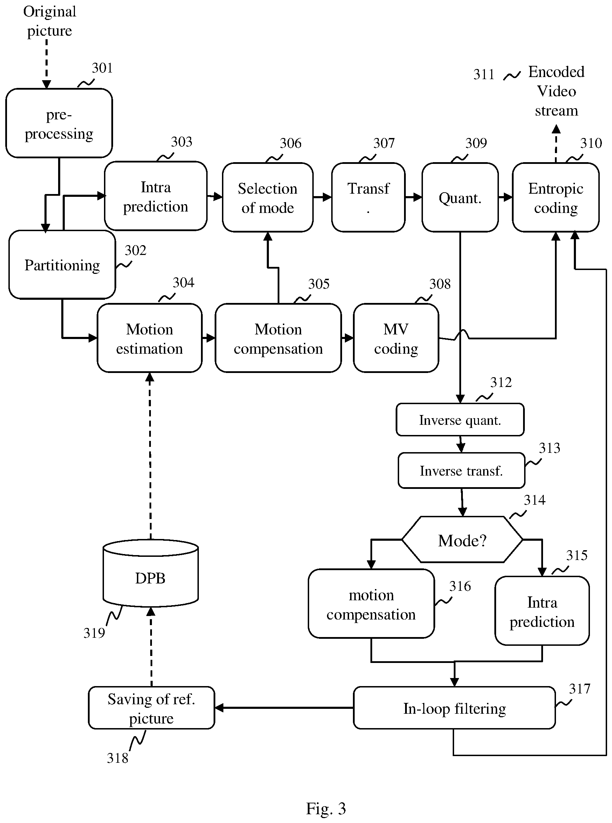

**Fig. 3** depicts schematically a method for encoding a video stream executed by an encoding module. For instance, the method for encoding of Fig. 3 is executed by the system 11. Variations of this method for encoding are contemplated, but the method for encoding of Fig. 3 is described below for purposes of clarity without describing all expected variations.

Before being encoded, a current original picture of an original video sequence may go through a pre-processing. For example, in a step 301, a color transform is applied to the current original picture (e.g., conversion from RGB 4:4:4 to YCbCr 4:2:0), or a remapping is applied to the current original picture components in order to get a signal distribution more resilient to compression (for instance using a histogram equalization of one of the color components). Pictures obtained by pre-processing are called pre-processed pictures in the following.

The encoding of a pre-processed picture begins with a partitioning of the pre-processed picture during a step 302, as described in relation to Fig. 2. The pre-processed picture is thus partitioned into CTU, CU, PU, TU, etc.

For each block, the encoding module determines then a coding mode between an intra prediction mode and an inter prediction mode.

Intra prediction aims at exploiting spatial redundancies in a picture. In a step 303, a current block (i.e. a PU or CU) is spatially predicted from samples of causal neighbour blocks in the same picture, i.e., the blocks on the top and top-right, the blocks on the left and left-bottom, and the top-left block. The encoder constructs a plurality of predictor blocks for the current block from these samples and chooses the one that leads to the best rate-distortion (RD) performance. In recent video compression methods, up to "67" intra prediction modes leading to "67" predictor blocks are constructed. The plurality of predictor blocks comprises a planar mode (indexed as mode 0), a DC mode (indexed as mode "1"), and the remaining "65" angular modes. The planar and DC modes aim to model slow changing intensity regions whereas the angular modes are designed to model directional structures present in pictures. The best prediction mode is encoded and transmitted to the decoder so that the decoder constructs the same intra predictor block for the current block.

To keep the decoder complexity low, the intra prediction uses generally only one row of reference pixels on top and one column of reference pixels on left of the current block. Though the encoder has the option of choosing among three sets of reference lines in a mode called *multiple reference lines* (MRL), the prediction is always based on one reference line that consists of one row on top and one column on left. Because of this limitation, the amount of information contained in the reference pixels is quite limited and thus the intra prediction efficiency, which is based on the correlation between the current block's samples and the reference samples, is also limited. More recently, a proposal for using up to two adjacent reference lines has been proposed. In this case, the predictor is constructed as a weighted average of the two predictors each based on a single reference line.

The above intra prediction modes are forward prediction tools, that is, the intra prediction methods used at the encoder is explicitly signalled to the decoder. Many tools employing backward estimation (that is, the prediction modes are estimated using already decoded causal samples in a picture) were recently proposed. Decoder Side Intra mode Derivation (DIMD), Template based Intra Mode Derivation and Fusion (TIMD) and Spatial Geometric Partition Mode (SGPM) all employ backward estimation methods to estimate multiple prediction modes for a block. The encoder uses the minimum amount of signalling to indicate which modes are employed and, if necessary, to perform a blending of the multiple predictions corresponding to the multiple prediction modes. The underlying assumption behind these methods is that not all parts of a block have the same directionality and therefore using multiple predictions and then blending those predictions can result in better predictions. Estimating these modes in the backward fashion eliminates the need of transmitting multiple prediction modes that can entail significant overhead. The assumption seems to be reasonable for larger blocks as the natural imagery can contain varying directionality of object structures.

SGPM is an intra prediction tool that tries to emulate the geometric partitioning mode (GPM) which is an inter prediction mode of VVC. The tool partitions a block into two parts according to a partition direction and generates two distinct intra-prediction modes, one for each part. Each intra prediction mode is used to generate a prediction for the entire block. The two predictions are then blended based on the partition direction so that each part gets its corresponding prediction.

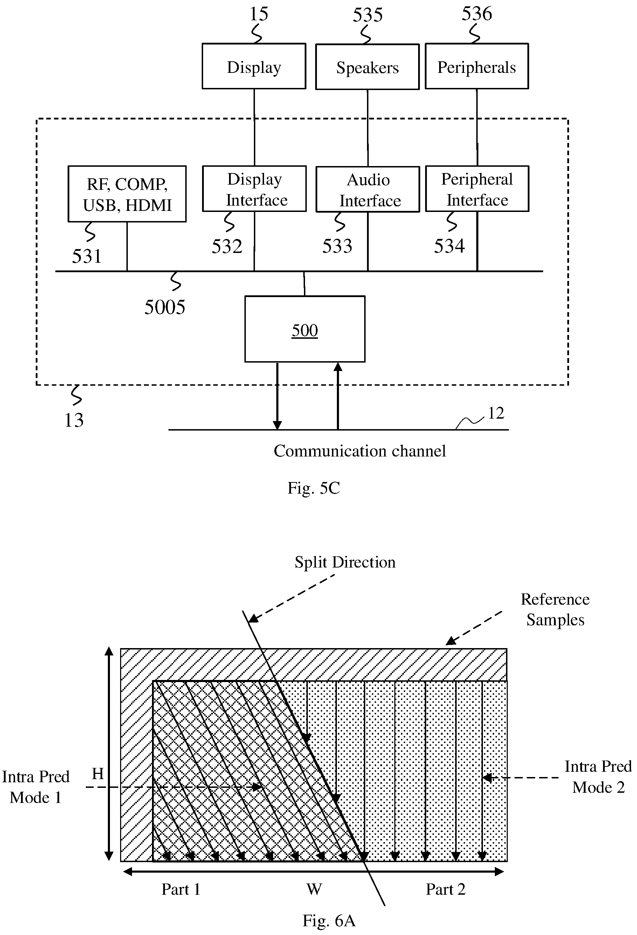

**Fig. 6A** illustrates the SGPM mode.

In Fig. 6A, the intra prediction mode 1 is referred to as *sgpmMode0* and the intra pred mode 2 is referred to as *sgpmMode1.* In SGPM, a block may be split in any one among "26" partition modes or directions resulting in two parts each associated with its own prediction mode.

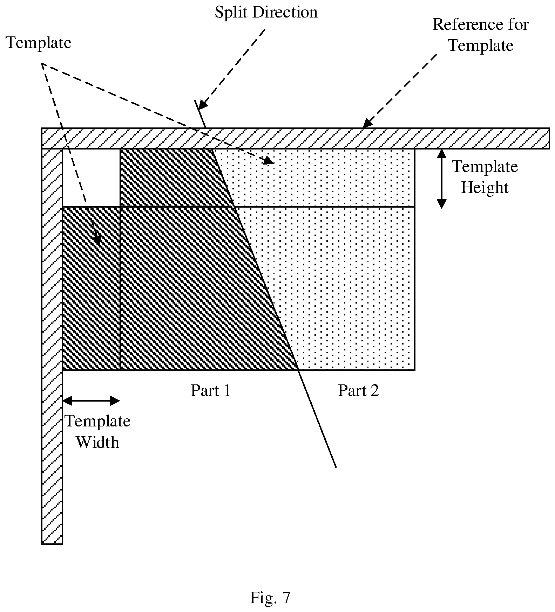

To efficiently signal the partition and associated prediction information, SGPM employs a template-reordered candidate list, where each candidate in the list comprises a combination of a partition mode and two intra prediction modes sgpmModeO and sgpmMode1. Only a candidate index in the list is signaled. A template is used to generate this candidate list. The shape of the template used in SGPM mode is shown in **Fig. 7.** For each possible candidate combination of one partition mode and two intra prediction modes of a predefined list of candidate combination, a prediction is obtained for the template from a reference array of reconstructed samples (denote reference for template in Fig. 7). The candidate combinations of the list are ranked in ascending order based on their SATD between the prediction and the reconstructed samples of the template. The length of the candidate list may be set equal to "16", and these candidates are regarded as the most probable SGPM candidate combinations for the current block. Both encoder and decoder construct the same list of candidate combinations based upon the template. To reduce the complexity in building the list of candidate combination, both the number of possible partition modes and the number of possible intra prediction modes are pruned.

The encoder checks the coding performance with all "16" candidate combinations in the list in a fast pass and then tests only short-listed candidate combinations for full RD performance. If the candidate combination with the best RD performance results in the best coding performance among all modes, then the encoder signals it with a flag called *sgpmFlag* followed by the binary encoding of the candidate combination index in the list of candidate combinations. The decoder decodes the *sgpmFlag* while parsing the bitstream. If the flag is decoded to be "1", it decodes the index of the candidate combination in the list of candidate combinations. Thereafter, it performs the whole process of template prediction to derive the two best SGPM prediction modes sgpmModeO and sgpmMode1 for each split direction to derive the list of best "16" candidates. Then, using the decoded candidate combination index, it decodes the two SGPM prediction modes and the split direction. Using the two SGPM prediction modes, it predicts the current block and blends the two predictions in the same manner as done by the encoder to arrive at the final prediction.

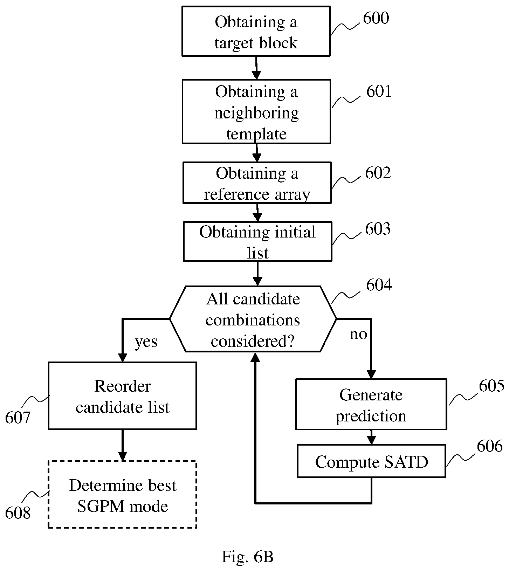

**Fig. 6B** illustrates an embodiment of a SGPM process.

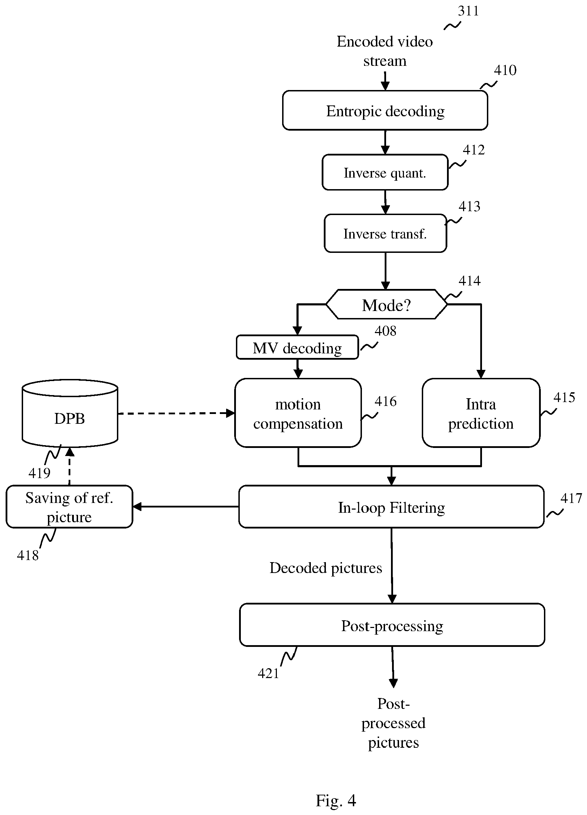

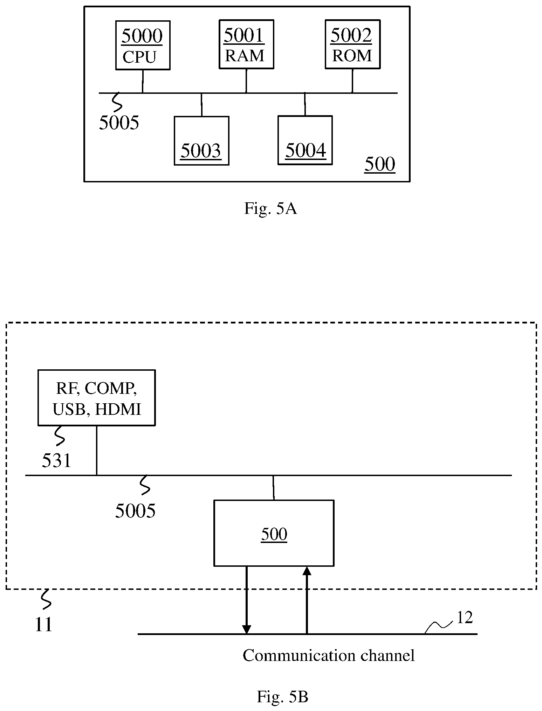

The process of Fig. 6B is executed either by a processing (for instance the processing module 500 described later in relation to Fig. 5A) implementing an encoding module of a decoding module. The process of Fig. 6B is typically executed during step 303 of Fig. 3 or during step 415 of Fig. 4.

In a step 600, the processing module obtains a target block.

In a step 601, the processing module obtains a neighboring template in the neighborhood of the target block as represented in Fig. 6A.

In a step 602, the processing module obtains a reference array in the neighborhood of the neighboring template as represented in Fig. 6A.

In a step 603, the processing module obtains an initial list of candidate combinations of a partition mode and two intra prediction modes sgpmModeO and sgpmMode1.

In a step 604, the processing module determines if all candidate combinations of the initial list of candidate combinations were tested.

If not, the processing module extracts a current candidate combination not already tested from the initial list and generates a prediction of the neighboring template from the reference array based on this current candidate combination. The prediction consists in splitting the neighboring template according to the partition mode of the candidate combination, to predict one partition resulting from the split by the intra prediction mode sgpmModeO and to predict the other partition resulting from the split by the intra prediction mode sgpmMode1.

In a step 606, the processing module computes a distortion in a form of a SATD between the prediction of the neighboring template and the neighboring template.

If all candidate combinations of the initial list had been tested, the processing module continues with a step 607. During step 607, the processing module reorders the initial list in order of ascending SATD and keeps, for example, the "16" first candidate combinations (i.e. the "16" candidate combinations corresponding to the "16" lowest distortions). The obtained list is called the list of most probable candidate combinations.

On the encoding module side, the processing module determines the best candidate combination among the "16" candidate combinations of the list of most probable candidate combinations in a step 608. The best candidate combination is the one offering the best RD performances.

If SGPM mode with the best candidate combination offers the best RD performance among other possible modes for the target block, during step 608, the processing module encodes the flag *sgpmFlag* as 1 and encodes the index of the best candidate combination in the list of most probable candidate combinations. Then, using the two SGPM intra prediction modes and the partition mode of the best candidate combination, it generates a predictor for the target block and blends the two predictions.

On the decoder side, during step 600, the processing module has decoded the flag sgpmFlag as 1 and the index of the best candidate combination in the list of most probable candidate combinations. In step 608, the processing module extracts the best candidate combination from the list of most probable candidate combinations and, using the two SGPM intra prediction modes and the partition mode of the best candidate combination, it generates a predictor for the target block and blends the two predictions.

The inter prediction consists in predicting the pixels of a current block from a block of pixels, referred to as the reference block, of a picture preceding or following the current picture, this picture being referred to as the reference picture. During the coding of a current block in accordance with the inter prediction method, a block of the reference picture closest, in accordance with a similarity criterion, to the current block is determined by a motion estimation step 304. During step 304, a motion vector indicating the position of the reference block in the reference picture is determined. Said motion vector is used during a motion compensation step 305 during which a residual block is calculated in the form of a difference between the current block and the reference block. In first video compression standards, the mono-directional inter prediction mode described above was the only inter mode available. As video compression standards evolve, the family of inter modes has grown significantly and comprises now many different inter modes.

During a selection step 306, the prediction mode optimising the compression performances, in accordance with a rate/distortion optimization criterion (i.e. RDO criterion), among the prediction modes tested (Intra prediction modes, Inter prediction modes), is selected by the encoding module.

When the prediction mode is selected, the residual block is transformed during a step 307. The transformed block is then quantized during a step 309.

Note that the encoding module can skip the transform and apply quantization directly to the non-transformed residual signal. When the current block is coded according to an intra prediction mode, information indicating the selected intra prediction mode are encoded by an entropy encoder during a step 310. When the current block is encoded according to an inter prediction, when appropriate, a motion vector of the block is predicted from a prediction vector selected from a set of motion vector predictors derived from reconstructed blocks situated in a spatial and temporal vicinity of the block to be encoded. The motion information is next encoded by the entropy encoder during step 310 in the form of a motion residual and an index for identifying the prediction vector. The transformed and quantized residual block is encoded by the entropy encoder during step 310.

Note that the encoding module can bypass both transform and quantization, *i.e.,* the entropy encoding is applied on the residual without the application of the transform or quantization processes. The result of the entropy encoding is inserted in an encoded video stream (i.e. in video data) 311.

Metadata such as SEI (supplemental enhancement information) messages can be attached to the encoded video stream 311. A SEI message as defined for example in standards such as AVC, HEVC or VVC (or in standard Versatile supplemental enhancement information (VSEI) messages for coded video bitstreams - H.274) is a data container or a syntax structure associated to a video stream and comprising metadata providing information relative to the video stream.

After the quantization step 309, the current block is reconstructed so that the pixels corresponding to that block can be used for future predictions. This reconstruction phase is also referred to as a *prediction loop.* An inverse quantization is therefore applied to the transformed and quantized residual block during a step 312 and an inverse transformation is applied during a step 313. According to the prediction mode used for the block obtained during a step 314, the predictor block of the block is reconstructed. If the current block is encoded according to an inter prediction mode, the encoding module applies, when appropriate, during a step 316, a motion compensation using the motion vector of the current block in order to identify the reference block of the current block. If the current block is encoded according to an intra prediction mode, during a step 315, the intra prediction mode selected for the current block is used for reconstructing the predictor block of the current block. The predictor block and the reconstructed residual block are added in order to obtain the reconstructed current block.

Following the reconstruction, an in-loop filtering intended to reduce the encoding artefacts is applied, during a step 317, to the reconstructed block. This filtering is called *in-loop filtering* since this filtering occurs in the prediction loop to obtain at the decoder the same reference pictures as the encoder and thus avoid a drift between the encoding and the decoding processes. In-loop filtering tools comprises deblocking filtering, SAO (Sample adaptive Offset) and ALF (Adaptive Loop Filtering).

When a block is reconstructed, it is inserted during a step 318 into a reconstructed picture stored in a memory 319 of reconstructed pictures generally called Decoded Picture Buffer (DPB). The reconstructed pictures thus stored can then serve as reference pictures for other pictures to be coded.

**Fig. 4** depicts schematically a method for decoding the encoded video stream (i.e. the video data) 311 encoded according to method described in relation to Fig. 3 executed by a decoding module. For instance, the method for decoding of Fig. 4 is executed by the system 13. Variations of this method for decoding are contemplated, but the method for decoding of Fig. 4 is described below for purposes of clarity without describing all expected variations.

The decoding is done block by block. For a current block, it starts with an entropic decoding of the current block during a step 410. Entropic decoding allows to obtain, at least, the prediction mode of the block.

If the block has been encoded according to an inter prediction mode, the entropy decoding allows to obtain, when appropriate, a motion vector predictor index, a motion residual and a prediction residual block. During a step 408, a motion vector is reconstructed for the current block using the prediction vector index and the motion residual.

If the block has been encoded according to an intra prediction mode, entropy decoding allows, when appropriate, to obtain a prediction mode and a prediction residual block. Steps 412, 413, 414, 415, 416 and 417 implemented by the decoding module are in all respects identical respectively to steps 312, 313, 314, 315, 316 and 317 implemented by the encoding module.

Decoded blocks are saved in decoded pictures and the decoded pictures are stored in a DPB 419 in a step 418. When the decoding module decodes a given picture, the pictures stored in the DPB 419 are identical to the pictures stored in the DPB 319 by the encoding module during the encoding of said given picture. The decoded picture can also be sent as output by the decoding module for instance to be displayed.

Following the in-loop filtering (i.e., following the generation of the decoded pictures), a post-processing step 421 may be applied.

Fig. 5A, 5B and 5C describes examples of device, apparatus and/or system allowing implementing the various embodiments.

**Fig. 5A** illustrates schematically an example of hardware architecture of a processing module 500 able to implement an encoding module or a decoding module capable of implementing respectively a method for encoding of Fig. 3 and a method for decoding of Fig. 4 modified according to different aspects and embodiments. The encoding module is for example comprised in the system 11 when this system is in charge of encoding the video stream. The decoding module is for example comprised in the system 13.

The processing module 500 comprises, connected by a communication bus 5005: a processor or CPU (central processing unit) 5000 encompassing one or more microprocessors, general purpose computers, special purpose computers, and processors based on a multi-core architecture, as non-limiting examples; a random access memory (RAM) 5001; a read only memory (ROM) 5002; a storage unit 5003, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive, or a storage medium reader, such as a SD (secure digital) card reader and/or a hard disc drive (HDD) and/or a network accessible storage device; at least one communication interface 5004 for exchanging data with other modules, devices or system. The communication interface 5004 can include, but is not limited to, a transceiver configured to transmit and to receive data over a communication channel. The communication interface 5004 can include, but is not limited to, a modem or network card.

If the processing module 500 implements a decoding module, the communication interface 5004 enables for instance the processing module 500 to receive encoded video streams and to provide a sequence of decoded pictures. If the processing module 500 implements an encoding module, the communication interface 5004 enables for instance the processing module 500 to receive a sequence of original picture data to encode and to provide an encoded video stream.

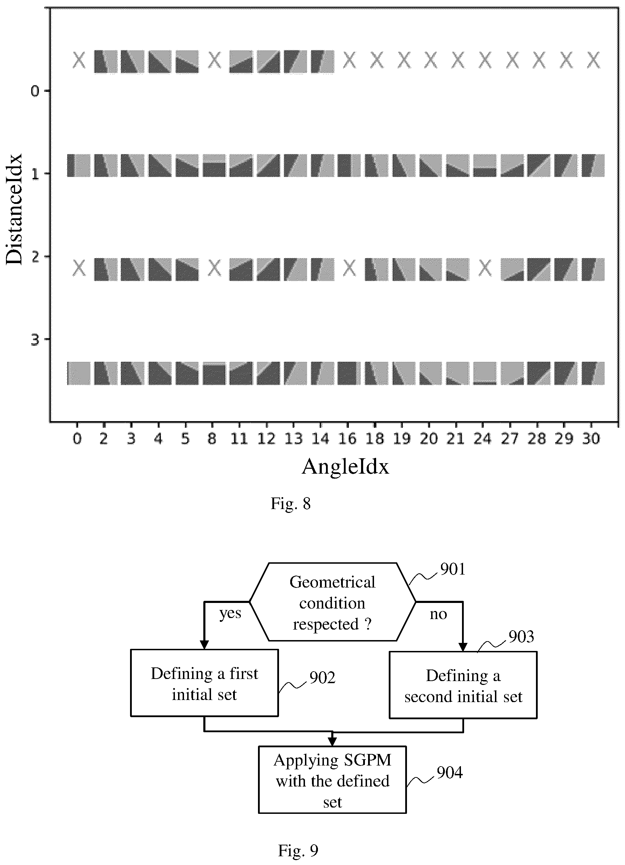

The processor 5000 is capable of executing instructions loaded into the RAM 5001 from the ROM 5002, from an external memory (not shown), from a storage medium, or from a communication network. When the processing module 500 is powered up, the processor 5000 is capable of reading instructions from the RAM 5001 and executing them. These instructions form a computer program causing, for example, the implementation by the processor 5000 of a decoding method as described in relation with Fig. 4 and/or an encoding method described in relation to Fig. 3, and methods illustrated in relation to Figs. 9 to 16, these methods comprising various aspects and embodiments described below in this document.

All or some of the algorithms and steps of the methods of Figs. 3, 4 and 9 to 16 may be implemented in software form by the execution of a set of instructions by a programmable machine such as a DSP (digital signal processor) or a microcontroller, or be implemented in hardware form by a machine or a dedicated component such as a FPGA (field-programmable gate array) or an ASIC (application-specific integrated circuit).

As can be seen, microprocessors, general purpose computers, special purpose computers, processors based or not on a multi-core architecture, DSP, microcontroller, FPGA and ASIC are electronic circuitry adapted or configured to implement at least partially the methods of Figs. 3, 4, Figs. 9 to 16.

**Fig. 5C** illustrates a block diagram of an example of the system 13 in which various aspects and embodiments are implemented. The system 13 can be embodied as a device including the various components described below and is configured to perform one or more of the aspects and embodiments described in this document. Examples of such devices include, but are not limited to, various electronic devices such as personal computers, laptop computers, smartphones, tablet computers, digital multimedia set top boxes, digital television receivers, personal video recording systems, connected home appliances and head mounted display. Elements of system 13, singly or in combination, can be embodied in a single integrated circuit (IC), multiple ICs, and/or discrete components. For example, in at least one embodiment, the system 13 comprises one processing module 500 that implements a decoding module. In various embodiments, the system 13 is communicatively coupled to one or more other systems, or other electronic devices, via, for example, a communications bus or through dedicated input and/or output ports. In various embodiments, the system 13 is configured to implement one or more of the aspects described in this document.

The input to the processing module 500 can be provided through various input modules as indicated in block 531. Such input modules include, but are not limited to, (i) a radio frequency (RF) module that receives an RF signal transmitted, for example, over the air by a broadcaster, (ii) a component (COMP) input module (or a set of COMP input modules), (iii) a Universal Serial Bus (USB) input module, and/or (iv) a High Definition Multimedia Interface (HDMI) input module. Other examples, not shown in FIG. 5C, include composite video.

In various embodiments, the input modules of block 531 have associated respective input processing elements as known in the art. For example, the RF module can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and bandlimited signal, (v) performing error correction, and (vi) demultiplexing to select the desired stream of data packets. The RF module of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. In one set-top box embodiment, the RF module and its associated input processing element receives an RF signal transmitted over a wired (for example, cable) medium, and performs frequency selection by filtering, down-converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF module includes an antenna.

Additionally, the USB and/or HDMI modules can include respective interface processors for connecting system 13 to other electronic devices across USB and/or HDMI connections. It is to be understood that various aspects of input processing, for example, Reed-Solomon error correction, can be implemented, for example, within a separate input processing IC or within the processing module 500 as necessary. Similarly, aspects of USB or HDMI interface processing can be implemented within separate interface ICs or within the processing module 500 as necessary. The demodulated, error corrected, and demultiplexed stream is provided to the processing module 500.

Various elements of system 13 can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system 13, the processing module 500 is interconnected to other elements of said system 13 by the bus 5005.

The communication interface 5004 of the processing module 500 allows the system 13 to communicate on the communication channel 12. As already mentioned above, the communication channel 12 can be implemented, for example, within a wired and/or a wireless medium.

Data is streamed, or otherwise provided, to the system 13, in various embodiments, using a wireless network such as a Wi-Fi network, for example IEEE 802.11 (IEEE refers to the Institute of Electrical and Electronics Engineers). The Wi-Fi signal of these embodiments is received over the communications channel 12 and the communications interface 5004 which are adapted for Wi-Fi communications. The communications channel 12 of these embodiments is typically connected to an access point or router that provides access to external networks including the Internet for allowing streaming applications and other over-the-top communications. Other embodiments provide streamed data to the system 13 using the RF connection of the input block 531. As indicated above, various embodiments provide data in a non-streaming manner. Additionally, various embodiments use wireless networks other than Wi-Fi, for example a cellular network or a Bluetooth network.

The system 13 can provide an output signal to various output devices, including the display system 15, speakers 535, and other peripheral devices 536. The display system 15 of various embodiments includes one or more of, for example, a touchscreen display, an organic light-emitting diode (OLED) display, a curved display, and/or a foldable display. The display system 15 can be for a television, a tablet, a laptop, a cell phone (mobile phone), ahead mounted display or other devices. The display system 15 can also be integrated with other components (for example, as in a smart phone), or separate (for example, an external monitor for a laptop). The other peripheral devices 536 include, in various examples of embodiments, one or more of a stand-alone digital video disc (or digital versatile disc) (DVR, for both terms), a disk player, a stereo system, and/or a lighting system. Various embodiments use one or more peripheral devices 536 that provide a function based on the output of the system 13. For example, a disk player performs the function of playing an output of the system 13.

In various embodiments, control signals are communicated between the system 13 and the display system 15, speakers 535, or other peripheral devices 536 using signaling such as AV.Link, Consumer Electronics Control (CEC), or other communications protocols that enable device-to-device control with or without user intervention. The output devices can be communicatively coupled to system 13 via dedicated connections through respective interfaces 532, 533, and 534. Alternatively, the output devices can be connected to system 13 using the communications channel 12 via the communications interface 5004 or a dedicated communication channel corresponding to the communication channel 12 in Fig. 5C via the communication interface 5004. The display system 15 and speakers 535 can be integrated in a single unit with the other components of system 13 in an electronic device such as, for example, a television. In various embodiments, the display interface 532 includes a display driver, such as, for example, a timing controller (T Con) chip.

The display system 15 and speaker 535 can alternatively be separate from one or more of the other components. In various embodiments in which the display system 15 and speakers 535 are external components, the output signal can be provided via dedicated output connections, including, for example, HDMI ports, USB ports, or COMP outputs.

**Fig. 5B** illustrates a block diagram of an example of the system 11 in which various aspects and embodiments are implemented. System 11 is very similar to system 13. The system 11 can be embodied as a device including the various components described below and is configured to perform one or more of the aspects and embodiments described in this document. Examples of such devices include, but are not limited to, various electronic devices such as personal computers, laptop computers, smartphones, tablet computers, a camera and a server. Elements of system 11, singly or in combination, can be embodied in a single integrated circuit (IC), multiple ICs, and/or discrete components. For example, in at least one embodiment, the system 11 comprises one processing module 500 that implements an encoding module. In various embodiments, the system 11 is communicatively coupled to one or more other systems, or other electronic devices, via, for example, a communications bus or through dedicated input and/or output ports. In various embodiments, the system 11 is configured to implement one or more of the aspects described in this document.

The input to the processing module 500 can be provided through various input modules as indicated in block 531 already described in relation to Fig. 5C.

Various elements of system 11 can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system 11, the processing module 500 is interconnected to other elements of said system 11 by the bus 5005.

The communication interface 5004 of the processing module 500 allows the system 11 to communicate on the communication channel 12.

Data is streamed, or otherwise provided, to the system 11, in various embodiments, using a wireless network such as a Wi-Fi network, for example IEEE 802.11 (IEEE refers to the Institute of Electrical and Electronics Engineers). The Wi-Fi signal of these embodiments is received over the communications channel 12 and the communications interface 5004 which are adapted for Wi-Fi communications. The communications channel 12 of these embodiments is typically connected to an access point or router that provides access to external networks including the Internet for allowing streaming applications and other over-the-top communications. Other embodiments provide streamed data to the system 11 using the RF connection of the input block 531.

As indicated above, various embodiments provide data in a non-streaming manner. Additionally, various embodiments use wireless networks other than Wi-Fi, for example a cellular network or a Bluetooth network.

The data provided to the system 11 can be provided in different format. In various embodiments these data are encoded and compliant with a known video compression format such as AV1, VP9, VVC, HEVC, AVC, etc. In various embodiments, these data are raw data provided for example by a picture and/or audio acquisition module connected to the system 11 or comprised in the system 11. In that case, the processing module 500 take in charge the encoding of these data.

The system 11 can provide an output signal to various output devices capable of storing and/or decoding the output signal such as the system 13.

Various implementations involve decoding. "Decoding", as used in this application, can encompass all or part of the processes performed, for example, on a received encoded video stream in order to produce a final output suitable for display. In various embodiments, such processes include one or more of the processes typically performed by a decoder, for example, entropy decoding, inverse quantization, inverse transformation, and prediction. In various embodiments, such processes also, or alternatively, include processes performed by a decoder of various implementations described in this application, for example, for applying a modified SGPM mode according to various embodiments.

Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded video stream. In various embodiments, such processes include one or more of the processes typically performed by an encoder, for example, partitioning, prediction, transformation, quantization, and entropy encoding. In various embodiments, such processes also, or alternatively, include processes performed by an encoder of various implementations described in this application, for example, for applying a modified SGPM mode according to various embodiments.

Whether the phrase "encoding process" is intended to refer specifically to a subset of operations or generally to the broader encoding process will be clear based on the context of the specific descriptions and is believed to be well understood by those skilled in the art.

Note that the syntax elements names as used herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between a rate and a distortion is usually considered. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of a reconstructed signal after coding and decoding. Faster approaches may also be used, to save encoding complexity, in particular with computation of an approximated distortion based on a prediction or a prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented, for example, in a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, retrieving the information from memory or obtaining the information for example from another device, module or from user.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", "one or more of' for example, in the cases of "A/B", "A and/or B" and "at least one of A and B", "one or more of A and B" is intended to encompass the selection of the first listed option (A) only, or the selection of the second listed option (B) only, or the selection of both options (A and B). As a further example, in the cases of "A, B, and/or C" and "at least one of A, B, and C", "one or more of A, B and C" such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a use of some coding tools. In this way, in an embodiment the same parameters can be used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can include a signal indicating a selected intra prediction mode. Such a signal can be formatted, for example, as an electromagnetic wave (for example, using a radio frequency portion of spectrum) or as a baseband signal. The formatting can include, for example, encoding an encoded video stream and modulating a carrier with the encoded video stream. The information that the signal carries can be, for example, analog or digital information. The signal can be transmitted over a variety of different wired or wireless links, as is known. The signal can be stored on a processor-readable medium.

In the following, various embodiments are proposed to improve the prediction with the SGPM mode.

First embodiment: adaptive partitioning.

A partition mode in SGPM refers to a split direction. Only "26" partition modes out of the "64" partitions of the GPM mode are used in SGPM. The "64" GPM partitions are specified in table TAB1 below where each partition index (*merge_gpm_partition_idx*) is specified by an angle index (*angleIdx*) and a distance index (*distanceIdx*) pair.

Table TAB 1

| merge_gpm_partition idx | 0 | 1 | 2 | 3 | 4 | 5 | 6 | 7 | 8 | 9 | 1 0 | 1 1 | 1 2 | 1 3 | 1 4 | 1 5 |
|---|---|---|---|---|---|---|---|---|---|---|---|---|---|---|---|---|
| angleIdx | 0 | 0 | 2 | 2 | 2 | 2 | 3 | 3 | 3 | 3 | 4 | 4 | 4 | 4 | 5 | 5 |
| distanceIdx | 1 | 3 | 0 | 1 | 2 | 3 | 0 | 1 | 2 | 3 | 0 | 1 | 2 | 3 | 0 | 1 |

(continued)

| merge_gpm_partition idx | 16 | 17 | 18 | 19 | 20 | 21 | 22 | 23 | 24 | 25 | 26 | 27 | 28 | 29 | 30 | 31 |
|---|---|---|---|---|---|---|---|---|---|---|---|---|---|---|---|---|
| angleIdx | 5 | 5 | 8 | 8 | 11 | 11 | 11 | 11 | 12 | 12 | 12 | 12 | 13 | 13 | 13 | 13 |
| distanceIdx | 2 | 3 | 1 | 3 | 0 | 1 | 2 | 3 | 0 | 1 | 2 | 3 | 0 | 1 | 2 | 3 |
| merge_gpm_partition idx | 32 | 33 | 34 | 35 | 36 | 37 | 38 | 39 | 40 | 41 | 42 | 43 | 44 | 45 | 46 | 47 |
| angleIdx | 14 | 14 | 14 | 14 | 16 | 16 | 18 | 18 | 18 | 19 | 19 | 19 | 20 | 20 | 20 | 21 |
| distanceIdx | 0 | 1 | 2 | 3 | 1 | 3 | 1 | 2 | 3 | 1 | 2 | 3 | 1 | 2 | 3 | 1 |
| merge_gpm_partition idx | 48 | 49 | 50 | 51 | 52 | 53 | 54 | 55 | 56 | 57 | 58 | 59 | 60 | 61 | 62 | 63 |
| angleIdx | 21 | 21 | 24 | 24 | 27 | 27 | 27 | 28 | 28 | 28 | 29 | 29 | 29 | 30 | 30 | 30 |
| distanceIdx | 2 | 3 | 1 | 3 | 1 | 2 | 3 | 1 | 2 | 3 | 1 | 2 | 3 | 1 | 2 | 3 |

**Fig. 8** illustrates schematically the 64 GPM partition modes.

The "26" partition modes used in SGPM are given by the following list of indexes *merge_gpm_partition_idx:* {0, 1, 6, 8, 10, 12, 14, 16, 18, 19, 20, 22, 24, 26, 28, 30, 36, 37, 42, 45, 48, 50, 51, 53, 56, 59}.

In other words, all candidate combinations of the initial list obtained in step 603 of the process of Fig. 6B comprise one of the "26" partitions specified by the above list of indexes *merge_gpm_partition_idx.*

As can be noticed, these "26" partition modes are fixed, that is, they do not depend on the target block shape or size, nor on the intra prediction modes or partition modes of neighbor blocks if these neighbor blocks are also SGPM coded.

In the first embodiment, it is proposed to make the partition modes adaptive. In a first variant, we make the partitions adaptive to the shape of the target block. For example, if the shape is square, that is, the height and width of the target block are equal, then the existing "26" partitions are applied. Else, if the block is rectangular with width greater than height, then we allow "26" partitions with vertical splits only. Else, if the block is rectangular with height greater than the width, then we allow "26" partitions with horizontal splits only. These are just examples. Instead of "26", we may select "16" partition modes for example.

In a second variant, the allowed SGPM partition modes for a block can be made to depend on its size. For example, with CU_HEIGHT and CU_WIDTH being respectively the height and the width of a target block, if CU_HEIGHT×CU_WIDTH < 32, then the number of candidate partition modes can be restricted to "2", otherwise "26" or "16" partition modes can be applied, for example, depending on the block shape.

As can be seen, in the first two variants of the first embodiment, the allowed SGPM partition modes depend on geometrical characteristics of the target block, the shape and the size being geometrical characteristics of a target block.

In a third variant, the number of candidate partition modes is signaled in a high-level syntax, for example in Sequence Parameter Set (SPS), Picture Parameter Set (PPS), Slice header, etc., for each block shape. The candidate partition mode range can be signaled as well.

**Fig. 9** illustrates a process according to the first embodiment.

The process of Fig. 9 is executed by the processing module 500 of the system 11 when the system 11 implements an encoder or by the processing module 500 of the system 13 when the system 13 implements a decoder. The encoder is for example the encoder of Fig. 3 with a modified step 303 implementing the process of Fig. 9. The decoder is for example the decoder of Fig. 4 with a modified step 415 implementing the process of Fig. 9. More precisely, the process of Fig. 9 is executed during step 603 of the process of Fig. 6B.

In a step 901, the processing module determines if a geometric condition is respected by the target block. The geometric condition is respected by the target block for example if the target block is rectangular with width greater than height or rectangular with height greater than the width or if CU_HEIGHT×CU_WIDTH < 32.

If the geometric condition is respected by the target block, step 901 is followed by a step 902, during which the processing module defines a first initial list of candidate combinations. For example, the first initial list of candidate combinations comprises candidate combinations comprising only vertical partition modes if the target block is rectangular with width greater than height or candidate combinations comprising only horizontal partition modes if the target block is rectangular with height greater than width or only two partitions modes if CU_HEIGHT×CU_WIDTH < 32.

If the geometric condition is not respected by the target block, step 901 is followed by a step 903, during which the processing module defines a second initial list of candidate combinations. For example, the second initial list of candidate combinations is the usual set of candidate combinations of the SGPM mode if the target block is square or if CU_HEIGHT×CU_WIDTH ≥ 32.

Second embodiment: mode extension.

In current implementations of SGPM, for each partition mode of the "26" partition modes specified by the list of indexes *merge_gpm_partition_idx*, two best intra prediction modes, sgpmModeO and sgpmMode1, are estimated. These two intra prediction modes are selected from a reduced set of most probable modes (MPM) and have an angular resolution of (1/32) of a sample.

In the second embodiment, it is proposed to increase the angular resolution of candidate modes to (1/64) of a sample. This is implemented without increasing the search complexity much.

The second embodiment starts by checking each pair of intra prediction modes of the reduced MPM list for each partition mode based on a prediction of the neighboring template from the reference array to identify the best pair for the intra prediction mode.

After this step, for each partition mode, neighbor modes of the best pair or of several best pairs determined for this partition mode, where the neighbor modes have the angular resolution of (1/64) of a sample, are tested. The neighbor modes are checked for better template prediction for a given partition mode.

All other steps of the SGPM process remain unchanged. The list of candidate combinations is constructed in the same manner, that is, in the ascending order of SATD score. The encoder checks the coding performance of all candidate combinations of the list of most probable candidate combinations in a fast pass and then tests only the short-listed candidates for full RD performance. If a candidate combination results in the best coding performance among all other possible intra prediction modes for the current block, the encoder signals it with the flag *sgpmFlag* as1 followed by the binary encoding of the candidate index in the list. The decoder decodes the flag *sgpmFlag* while parsing the bitstream. If the flag is decoded to be "1", it decodes the index of the candidate in the list of most probable candidate combinations. Thereafter, it performs the whole process of template prediction in the same manner as the encoder to derive the list of candidate combinations. Then, using the decoded candidate combination index, it decodes the two intra prediction modes and the partition mode. Using the two intra prediction modes, which have angle resolution of (1/64) of a sample, it predicts the current block and blends the two predictions in the same manner as done by the encoder to arrive at the final prediction.

Angular resolution can be chosen by the encoder and signaled in a high-level syntax (SPS, PPS, slice header). Resolution can be adaptive to the block size, for example high resolution being available only for larger blocks.

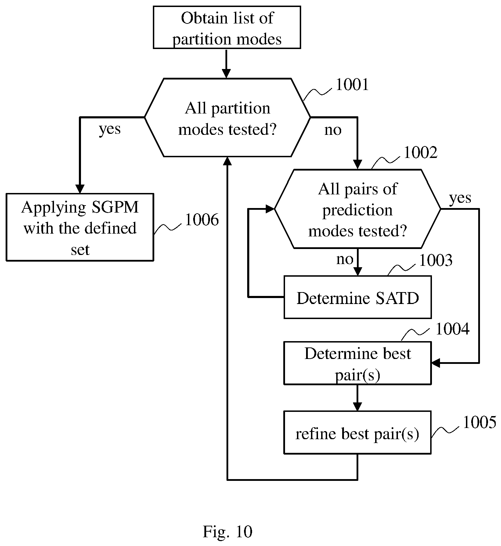

**Fig. 10** illustrates a process according to the second embodiment.

The process of Fig. 10 is executed by the processing module 500 of the system 11 when the system 11 implements an encoder or by the processing module 500 of the system 13 when the system 13 implements a decoder. The encoder is for example the encoder of Fig. 3 with a modified step 303 implementing the process of Fig. 10. The decoder is for example the decoder of Fig. 4 with a modified step 415 implementing the process of Fig. 10. More precisely, the process of Fig. 10 is executed during step 603 of the process of Fig. 6B.

In a step 1000, the processing module 500 obtains for example the list "26" partition modes specified by the list of indexes *merge_gpm_partition_idx.*

In a step 1001, the processing module 500 determines if all partitions of the list of partition modes were tested.

If no, the processing module 500 extracts a current partition mode not already tested from the list of partition modes and applies a step 1002 during which it determines if all pairs of intra prediction modes were tested for the current partition mode.

If no, the processing module 500 extracts a current pair of intra prediction modes from a set of pair of intra prediction modes available for the target block and not already tested for the current intra prediction mode and generates in a step 1003 a prediction of the neighboring template from the reference array based on the current partition mode and the intra prediction modes of the current pair. In addition, during step 1003, the processing module 500 computes a SATD between the predictor of the neighboring template and the neighboring template.

If all pairs of intra prediction modes were tested for the current partition mode, the processing module 500 continues with a step 1004 during which it determines the best pair (or the best pairs) based on the computed SATD. The best pair (or the best pairs) is (are) the pair(s) with the lowest value(s) of SATD.

In a step 1005, the processing module 500 refines the best pair (or the best pairs) with neighbor intra prediction modes having an angular resolution of (1/64) to obtain refined pairs. During step 1005, each of the best pair (or best pairs) and refined pairs are combined with the current partition mode to create candidate combinations that are inserted in the initial list of candidate combinations.

If in step 1001, all partition modes were tested, the processing module 500 continues with a step 1006. During step 1006, the processing module 500 continues the SGPM process with step 604 using the so created initial list of candidate combinations.

Third embodiment: no wide angular modes

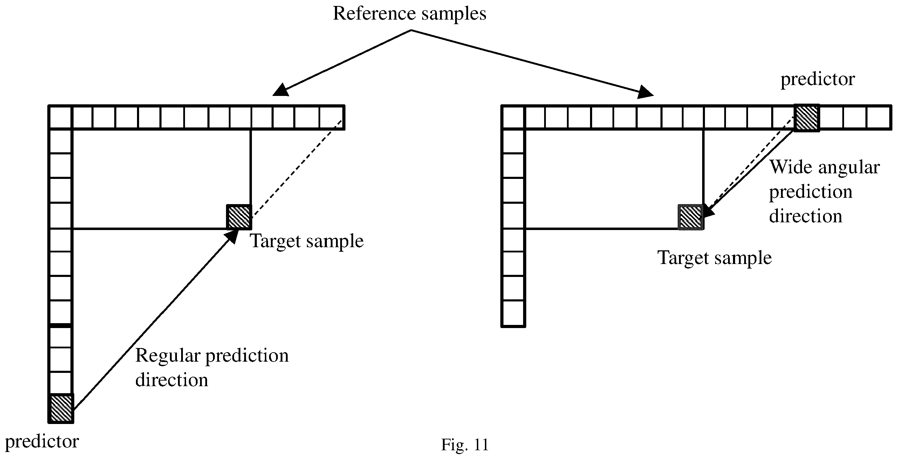

VVC and ECM support wide angular modes for intra prediction of a block. The idea is to replace some suitable regular angular modes by wide angular modes in opposite direction if the target block is rectangular. Doing this allows choosing the predictor samples for target samples towards the bottom right corner of the target block from nearer reference samples. **Fig. 11** illustrates wide angular modes. Thus, the wide angular intra prediction tries to improve the prediction accuracy of target samples towards the bottom right part of a target block.

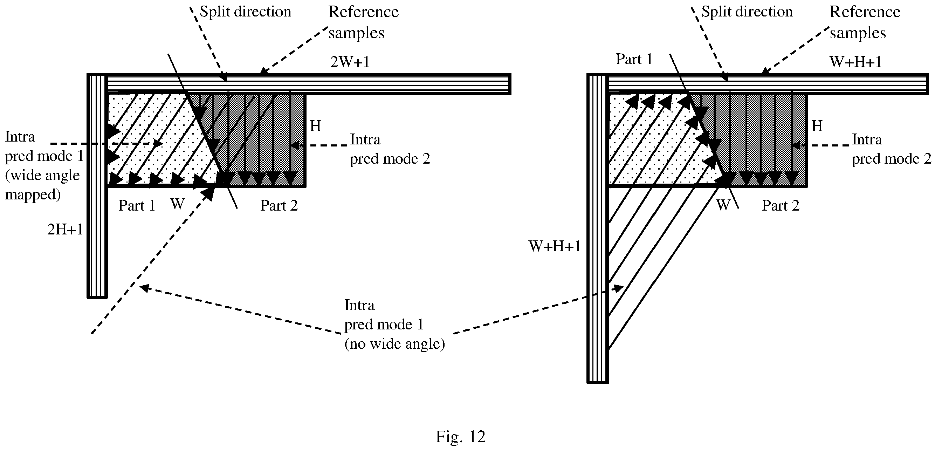

In some implementation of SGPM, the application of the wide angular modes remains unchanged. For a rectangular target block, the intra prediction modes tested for the template prediction are mapped to the wide angular modes in the usual manner if they satisfy wide angle conditions. The wide angle conditions are for instance the one detailed in section 3.3.1.2 of document JVET-T2002, Algorithm description for Versatile Video Coding and Test Model 11 (VTM 11), Jianle Chen, Yan Ye, Seung Hwan Kim, Joint Video Experts Team (JVET) of ITU-T SG 16 WP 3 and ISO/IEC JTC 1/SC 2, 20th Meeting, by teleconference, 7 - 16 October 2020. Thus, the template is also predicted with a wide angular mode as the target block would be. But as the target block is split into two parts, it may not make sense to map the intra prediction modes to wide angular modes. Doing so may cause inaccurate prediction in one part as shown in **Fig. 12.** Therefore, in the third embodiment; it is proposed not to apply the wide angular predictions in SGPM.

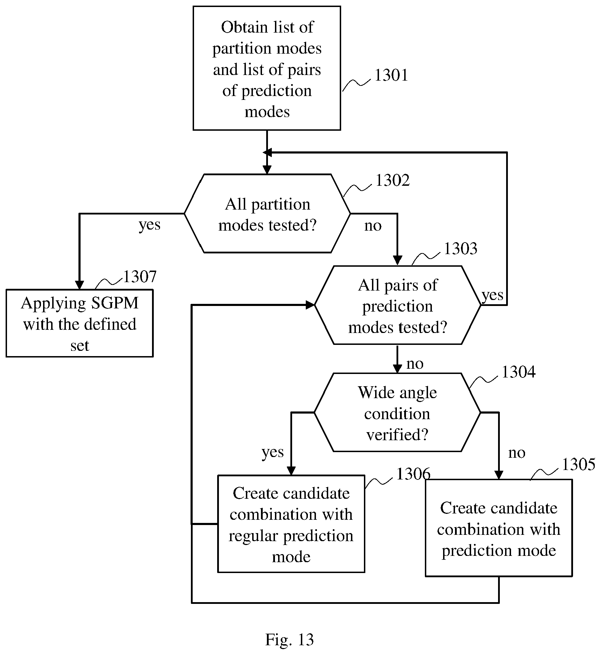

**Fig. 13** illustrates a process according to the third embodiment.

The process of Fig. 13 is executed by the processing module 500 of the system 11 when the system 11 implements an encoder or by the processing module 500 of the system 13 when the system 13 implements a decoder. The encoder is for example the encoder of Fig. 3 with a modified step 303 implementing the process of Fig. 13. The decoder is for example the decoder of Fig. 4 with a modified step 415 implementing the process of Fig. 13. More precisely, the process of Fig. 13 is executed during step 603 of the process of Fig. 6B.

In a step 1301, the processing module 500 obtains a list of partition modes and a list of pairs of intra prediction modes for constructing candidate combinations. At this stage, each intra prediction mode of each pair of intra prediction modes is a regular intra prediction mode.

In a step 1302, the processing module 500 determines if all partitions modes of the list of partition modes were tested. If no, the processing module 500 extracts a current partition mode that has not been already considered in the list of partition modes and determines in a step 1303 if all pairs of intra prediction modes of the list of pairs of intra prediction modes were tested.

If no, the processing module 500 extracts a current pair of intra prediction modes that has not been already considered in the list of pairs of intra prediction modes and determines, in a step 1304, if the target block verifies the wide angle conditions.

If the target block verifies the wide angle conditions, in a step 1306, the processing module 500 creates a candidate combination with the current pair of intra prediction modes and the current partition mode and inserts this combination in the initial list of candidate combinations. As can be seen, whereas the verification of the wide angle conditions should have implied that the regular intra prediction modes of the current pair of prediction should have been mapped to wide angular modes, the regular intra prediction modes are kept to create the candidate combination.

If the target block doesn't verify the wide angle conditions, in a step 1305, the processing module 500 creates a candidate combination with the current pair of intra prediction modes and inserts this combination in the initial list of candidate combinations.

Steps 1305 and 1306 are followed by step 1303.

If all pairs of intra prediction modes of the list of pairs of intra prediction modes had been considered for the current partition mode in step 1303, step 1303 is followed by step 1302.

If all partition modes have been considered for the target block in step 1302, step 1302 is followed by a step 1307. At this stage an initial list of candidate combinations had been created.

During step 1307, the processing module 500 continues the SGPM process with step 604 using the so created initial list of candidate combinations.

In a simpler variant of the process of Fig. 13, since each intra prediction mode of each pair of intra prediction modes of the list of pairs of intra prediction modes obtained in step 1301 is a regular intra prediction modes, steps 1304 and 1306 are not applied and step 1303 is followed directly by step 1305. In this variant, the fact that the wide angle condition is verified or not is not tested.

Fourth embodiment: Consistent mode selection.

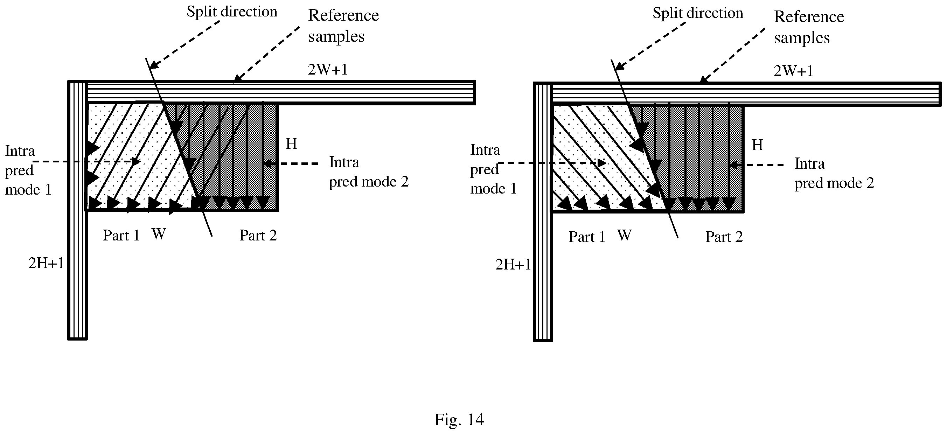

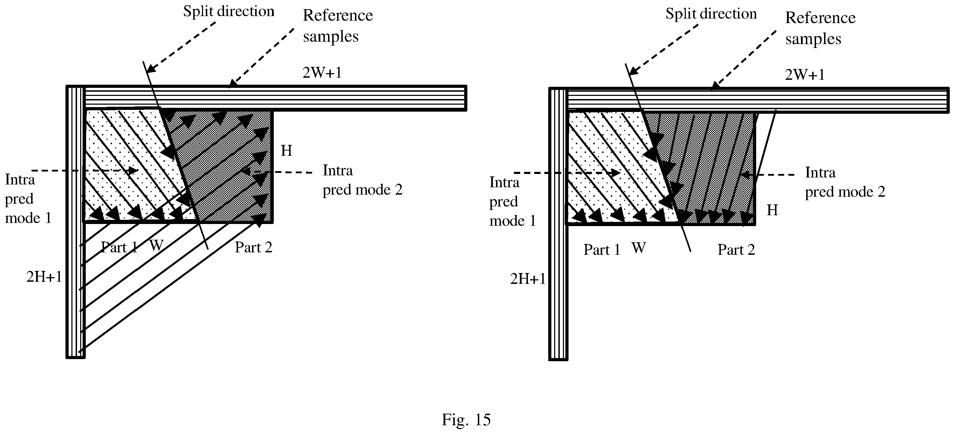

In some implementations of SGPM, the best pair of intra prediction modes is determined for a given partition mode. The two intra prediction modes of the pair are selected from a reduced MPM list. All combinations of intra prediction modes sgpmModeO and sgpmMode1 are tested for a given partition mode. In the fourth embodiment, it is proposed to choose the modes spgmMode0 and spgmMode1 based on the directionality of the partition mode. The fourth embodiment avoids some situation wherein, as shown in Figs. 14 and 15, the intra prediction modes are inconsistent with the partition mode leading to erroneous candidate combinations. On the left side of Figs. 14 and 15, we show cases where the two parts can have reference samples overlap (Fig. 14 left side) or non-adjacency of reference samples to the concerned part (Fig. 15 left side) leading to inconsistency. On the right sides of Figs. 14 and 15, we show, for the same partition mode, how the two intra prediction modes are consistently chosen. Two consistency criteria need to be respected for each intra prediction mode of a pair of intra prediction modes: there is no overlap of reference samples for the two parts (reference samples used for one partition are different from reference samples used for the other partition); and, reference samples for the right partition come from the top reference array. All candidate combinations wherein the pair of intra prediction modes doesn't respect the two consistency criteria are cancelled from the initial list of candidate combinations.

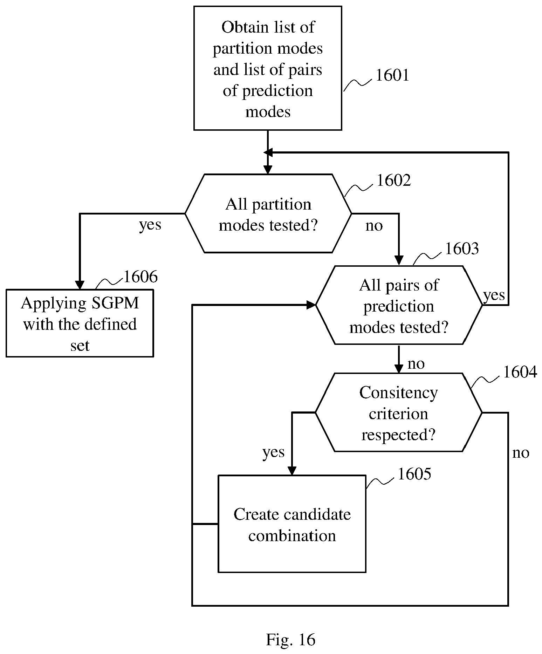

**Fig. 16** illustrates a process according to the third embodiment.

The process of Fig. 16 is executed by the processing module 500 of the system 11 when the system 11 implements an encoder or by the processing module 500 of the system 13 when the system 13 implements a decoder. The encoder is for example the encoder of Fig. 3 with a modified step 303 implementing the process of Fig. 16. The decoder is for example the decoder of Fig. 4 with a modified step 415 implementing the process of Fig. 16. More precisely, the process of Fig. 16 is executed during step 603 of the process of Fig. 6B.

In a step 1601, the processing module 500 obtains a list of partition modes and a list of pairs of intra prediction modes for constructing candidate combinations.

In a step 1602, the processing module 500 determines if all partitions modes of the list of partition modes were tested. If no, the processing module 500 extracts a current partition mode that has not been already considered in the list of partition modes and determines in a step 1603 if all pairs of intra prediction modes of the list of pairs of intra prediction modes were tested.

If no, the processing module 500 extracts a current pair of intra prediction modes that has not been already considered in the list of pairs of intra prediction modes and determines, in a step 1604, if the current pair of intra prediction modes respects the two consistency criteria.

If the target block verifies the two consistency criteria, in a step 1605, the processing module 500 creates a candidate combination with the current pair of intra prediction modes and the current partition mode and includes it in the initial list of candidate combinations.

If the target block doesn't verify at least one of the two consistency criteria, step 1604 is followed directly by step 1603. As can be seen, when at least one of the two consistency criteria is not respected by the current pair of intra prediction modes, the potential candidate combination combining the current partition mode and the current pair of intra prediction modes is rejected and not included in the initial list of candidate combinations.

Step 1605 is followed by step 1603.

If all pairs of intra prediction modes of the list of pairs of intra prediction modes had been considered for the current partition mode in step 1603, step 1603 is followed by step 1602.

If all partition modes have been considered for the target block in step 1602, step 1602 is followed by a step 1606. At this stage an initial list of candidate combinations had been created.

During step 1606, the processing module 500 continues the SGPM process with step 604 using the so created initial list of candidate combinations.

We have presented the first, second, third and fourth embodiments independently. However, these four embodiments may be combined. In addition, any combination of two or three of these embodiments are also possible.

Until now, the first, second, third and fourth embodiment improving SGPM are used in place of the regular SGPM tool. In a fifth embodiment, the first, second, third and fourth embodiment are each (or in combination) considered as additional intra prediction modes that can be used by an encoder and a decoder in addition to other existing modes such as the SGPM tool. The intra prediction mode offering the best rate distortion performance is selected by the encoder.

We described above a number of embodiments. Features of these embodiments can be provided alone or in any combination. Further, embodiments can include one or more of the following features, devices, or aspects, alone or in any combination, across various claim categories and types:

- A bitstream or signal that includes one or more of the described syntax elements, or variations thereof.
- Creating and/or transmitting and/or receiving and/or decoding a bitstream or signal that includes one or more of the described syntax elements, or variations thereof.
- A TV, set-top box, cell phone, tablet, or other electronic device that performs at least one of the embodiments described.
- A TV, set-top box, cell phone, tablet, or other electronic device that performs at least one of the embodiments described, and that displays (e.g. using a monitor, screen, or other type of display) a resulting picture.
- A TV, set-top box, cell phone, tablet, or other electronic device that tunes (e.g. using a tuner) a channel to receive a signal including an encoded video stream, and performs at least one of the embodiments described.
- A TV, set-top box, cell phone, tablet, or other electronic device that receives (e.g. using an antenna) a signal over the air that includes an encoded video stream, and performs at least one of the embodiments described.
- A server, camera, cell phone, tablet or other electronic device that transmits (e.g. using an antenna) a signal over the air that includes an encoded video stream, and performs at least one of the embodiments described.
- A server, camera, cell phone, tablet or other electronic device that tunes (e.g. using a tuner) a channel to transmit a signal including an encoded video stream, and performs at least one of the embodiments described.

**Claims**

1. A method comprising:

obtaining (600) a target block;
obtaining (601) a neighbor template of samples in a reconstructed neighborhood of the target block;
determining 602, 603, 604, 605, 606, 607, 608) a combination of a pair of intra prediction modes and a partition mode based on predictions of the neighbor template from a reference array of samples in a reconstructed neighborhood of the neighbor template, wherein the partition mode depends (901, 902, 903, 904) on a geometrical condition based on target block's parameters; and
predicting the target block using the combination.

2. The method of claim 1 wherein the geometrical condition is based on whether the target block is rectangular with a width greater than a height or rectangular with the height greater than the width or based on a comparison of a multiplication of the width of the block by the height of the block with a value.

3. A method comprising:

obtaining (600) a target block;
obtaining (601) a neighbor template of samples in a reconstructed neighborhood of the target block;
determining (602, 603, 604, 605, 606, 607, 608) a combination of a pair of intra prediction modes and a partition mode from an initial list of combinations of a pair of intra prediction modes and a partition mode based on predictions of the neighbor template from a reference array of samples in a reconstructed neighborhood of the neighbor template; and
predicting the target block using the combination;
wherein, the obtaining of the initial list comprises:

for each partition mode of a list of partition modes: determining (1001, 1002, 1003, 1004) one or more best pairs of intra prediction modes according to a distortion criteria, the distortion criteria consisting, for a combination of a partition mode and a pair of intra prediction modes in computing a distortion between the neighboring template and a prediction of the neighboring template from the reference array based on the partition mode and the pair of intra prediction modes, the intra prediction modes having a first angular resolution;
creating (1005) one or more first candidate combinations from the partition mode and the one or more best pairs and one or more second candidate combinations from the partition mode and one or more refined pairs resulting from a refinement of at least one intra prediction mode of one of the best pair to a second angular resolution finer than the first angular resolution; and inserting each first candidate combination and each second candidate combination in the initial list.

4. A method comprising:

obtaining (600) a target block;
obtaining (601) a neighbor template of samples in a reconstructed neighborhood of the target block;
determining (602, 603, 604, 605, 606, 607, 608) a combination of a pair of intra prediction modes and a partition mode from an initial list of combinations of a pair of intra prediction modes and a partition mode based on predictions of the neighbor template from a reference array of samples in a reconstructed neighborhood of the neighbor template; and
predicting the target block using the combination;
wherein, (1304, 1305, 1306) each intra prediction mode of each pair of intra prediction modes of each combination of a pair of intra prediction modes and a partition mode of the initial list is a regular intra prediction mode.

5. A method comprising:

obtaining (600) a target block;
obtaining (601) a neighbor template of samples in a reconstructed neighborhood of the target block;
determining (602, 603, 604, 605, 606, 607, 608) a combination of a pair of intra prediction modes and a partition mode from an initial list of combinations of a pair of intra prediction modes and a partition mode based on predictions of the neighbor template from a reference array of samples in a reconstructed neighborhood of the neighbor template; and,
predicting the target block using the combination;
wherein, the obtaining of the initial list comprises:
for each partition mode of a list of partition modes and each pair of intra prediction modes of a list of pairs of intra prediction modes:

creating (1604, 1605) a candidate combination from the partition mode and the pair of intra prediction modes only responsive to the candidate combination respects two consistency criterion, a first consistency criterion of the two consistency criterion being respected responsive to reference samples used for one partition of the target block are different from reference samples used for another partition of the target block and a second consistency criterion of the two consistency criterion being respected responsive to reference samples for a right partition of the target block come from a top part of the neighboring template; and, inserting the candidate combination in the initial list.

6. A method for encoding comprising the method of any previous claim.

7. A method for decoding comprising the method of any previous claim.

8. A device comprising electronic circuitry configured for:

obtaining (600) a target block;
obtaining (601) a neighbor template of samples in a reconstructed neighborhood of the target block;
determining (602, 603, 604, 605, 606, 607, 608) a combination of a pair of intra prediction modes and a partition mode based on predictions of the neighbor template from a reference array of samples in a reconstructed neighborhood of the neighbor template, wherein the partition mode depends (901, 902, 903, 904) on a geometrical condition based on target block's parameters; and predicting the target block using the combination.

9. The device of claim 8 wherein the geometrical condition is based on whether the target block is rectangular with a width greater than a height or rectangular with the height greater than the width or based on a comparison of a multiplication of the width of the block by the height of the block with a value.

10. A device comprising electronic circuitry configured for:

obtaining (600) a target block;
obtaining (601) a neighbor template of samples in a reconstructed neighborhood of the target block;
determining (602, 603, 604, 605, 606, 607, 608) a combination of a pair of intra prediction modes and a partition mode from an initial list of combinations of a pair of intra prediction modes and a partition mode based on predictions of the neighbor template from a reference array of samples in a reconstructed neighborhood of the neighbor template; and predicting the target block using the combination;
wherein, the obtaining of the initial list comprises:

for each partition mode of a list of partition modes: determining (1001, 1002, 1003, 1004) one or more best pairs of intra prediction modes according to a distortion criteria, the distortion criteria consisting, for a combination of a partition mode and a pair of intra prediction modes in computing a distortion between the neighboring template and a prediction of the neighboring template from the reference array based on the partition mode and the pair of intra prediction modes, the intra prediction modes having a first angular resolution;
creating (1005) one or more first candidate combinations from the partition mode and the one or more best pairs and one or more second candidate combinations from the partition mode and one or more refined pairs resulting from a refinement of at least one intra prediction mode of one of the best pair to a second angular resolution finer than the first angular resolution; and inserting each first candidate combination and each second candidate combination in the initial list.

11. A device comprising electronic circuitry configured for:

obtaining (600) a target block;

obtaining (601) a neighbor template of samples in a reconstructed neighborhood of the target block;

determining (602, 603, 604, 605, 606, 607, 608) a combination of a pair of intra prediction modes and a partition mode from an initial list of combinations of a pair of intra prediction modes and a partition mode based on predictions of the neighbor template from a reference array of samples in a reconstructed neighborhood of the neighbor template; and

predicting the target block using the combination;

wherein, (1304, 1305, 1306) each intra prediction mode of each pair of intra prediction modes of each combination of a pair of intra prediction modes and a partition mode of the initial list is a regular intra prediction mode.

**12.** A device comprising electronic circuitry configured for:

obtaining (600) a target block;

obtaining (601) a neighbor template of samples in a reconstructed neighborhood of the target block;

determining (602, 603, 604, 605, 606, 607, 608) a combination of a pair of intra prediction modes and a partition mode from an initial list of combinations of a pair of intra prediction modes and a partition mode based on predictions of the neighbor template from a reference array of samples in a reconstructed neighborhood of the neighbor template; and,

predicting the target block using the combination;

wherein, the obtaining of the initial list comprises:

for each partition mode of a list of partition modes and each pair of intra prediction modes of a list of pairs of intra prediction modes:

creating (1604, 1605) a candidate combination from the partition mode and the pair of intra prediction modes only responsive to the candidate combination respects two consistency criterion, a first consistency criterion of the two consistency criterion being respected responsive to reference samples used for one partition of the target block are different from reference samples used for another partition of the target block and a second consistency criterion of the two consistency criterion being respected responsive to reference samples for a right partition of the target block come from a top part of the neighboring template; and,

inserting the candidate combination in the initial list.

**13.** An encoding apparatus comprising a device according to any previous claim from claim 8 to 12.

**14.** A decoding apparatus comprising a device according to any previous claim from claim 8 to 12.

**15.** Non-transitory information storage medium storing program code instructions for implementing the method according to any previous claim from claim 1 to 7.

Fig. 1

Fig. 2

Original
picture

301

pre-
processing

303                    306              307            309                  310

Intra              Selection       Transf       Quant.          Entropic
prediction        of mode          .                             coding

Partitioning    302

304

Motion           Motion           MV
estimation       compensation     coding

311 ∿ Encoded
Video
stream

312

Inverse quant.

313

Inverse transf.

314

Mode?                315

316

motion              Intra
compensation        prediction

DPB

319

317

Saving of ref.                    In-loop filtering
picture

318

Fig. 3

311

Encoded video
stream

410

Entropic decoding

412

Inverse quant.

413

Inverse transf.

414

Mode?

408

MV decoding

DPB

416

motion
compensation

415

Intra
prediction

419

Saving of ref.
picture

418

417

In-loop Filtering

Decoded pictures

421

Post-processing

Post-
processed
pictures

Fig. 4

| 5000<br>CPU | 5001<br>RAM | 5002<br>ROM |

5005

5003     5004

500

Fig. 5A

RF, COMP,<br>USB, HDMI

531

5005

500

11

12

Communication channel

Fig. 5B

15  535  536

Display  Speakers  Peripherals

RF, COMP, USB, HDMI  Display Interface  Audio Interface  Peripheral Interface

531  532  533  534

5005

500

13

12

Communication channel

Fig. 5C

Split Direction

Reference Samples

Intra Pred Mode 1

H

Intra Pred Mode 2

Part 1  W  Part 2

Fig. 6A

Obtaining a
target block ～ 600

Obtaining a
neighboring
template ～ 601

Obtaining a
reference array ～ 602

Obtaining initial
list ～ 603

All candidate
combinations
considered? ～ 604

yes          no

Reorder
candidate list
607

Generate
prediction ～ 605

Compute SATD ～ 606

Determine best
SGPM mode
608

Fig. 6B

Fig. 7

Fig. 8

Fig. 9

Fig. 10

Reference samples

predictor

Wide angular
prediction
direction

Target sample

Regular prediction
direction

Target sample

predictor

Fig. 11

EP 4 672 742 A1

Fig. 12

Obtain list of
partition modes
and list of pairs
of prediction
modes

1301

All partition
modes tested?

1302

yes

no

1303

All pairs of
prediction
modes tested?

yes

1307

Applying SGPM
with the defined
set

no

Wide angle
condition
verified?

1304

yes

no

1306

Create candidate
combination with
regular prediction
mode

1305

Create candidate
combination with
prediction mode

Fig. 13

Fig. 14

EP 4 672 742 A1

Fig. 15

Fig. 16

Europäisches
Patentamt
European
Patent Office
Office européen
des brevets

# EUROPEAN SEARCH REPORT

**Application Number**

EP 24 30 6018

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/008611 A1 (INTERDIGITAL CE PATENT HOLDINGS SAS [FR]) 11 January 2024 (2024-01-11) | 1,2,4, 6-9,11, 13-15 | INV. H04N19/11 H04N19/105 |
| Y | * paragraphs [0004], [0014], [0025], [0163] - [0164], [0166] - [0167], [0187] - [0189], [0214], [0216], [0220], [0223] * <br> * figures 2, 3, 6, 7, 11, 21A, 21C, 22, 23, 24 * | 3,5,10, 12 | H04N19/119 H04N19/147 H04N19/176 H04N19/593 |
| Y | WO 2024/079193 A1 (INTERDIGITAL CE PATENT HOLDINGS SAS [FR]) 18 April 2024 (2024-04-18) * paragraphs [0122], [0131] - [0141] * | 3,10 | |
| Y | KR 2023 0143582 A (ELECTRONICS & TELECOMMUNICATIONS RES INST [KR]) 12 October 2023 (2023-10-12) * paragraphs [0009] - [0021], [1663] - [1670], [1675] - [1679], [1765] - [1770] * <br> * figures 47, 55-56 * | 5,12 | |

**TECHNICAL FIELDS SEARCHED (IPC)**

H04N

The present search report has been drawn up for all claims

| Place of search | Date of completion of the search | Examiner |
|---|---|---|
| The Hague | 15 November 2024 | Mayer, Claudia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6018

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2024

| Patent document cited in search report | Publication date | Patent family member(s) | | Publication date |
|---|---|---|---|---|
| WO 2024008611 A1 | 11-01-2024 | TW | 202404367 A | 16-01-2024 |
| | | WO | 2024008611 A1 | 11-01-2024 |
| WO 2024079193 A1 | 18-04-2024 | NONE | | |
| KR 20230143582 A | 12-10-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- JVET-AF2025: Algorithm description of Enhanced Compression Model 11 (ECM 11) / Joint Video Experts Team (JVET) of ITU-T SG 16 WP 3 and ISO/IEC JTC 1/SC 29. *32nd Meeting, Hannover, DE*, 13 October 2023

- **JIANLE CHEN** ; **YAN YE** ; **SEUNG HWAN KIM**. *Joint Video Experts Team (JVET) of ITU-T SG 16 WP 3 and ISO/IEC JTC 1/SC 2, 20th Meeting, by teleconference*, 07 October 2020